# EUROPEAN PATENT APPLICATION

(11) **EP 2 747 374 A1**
(43) Date of publication of application: **25.06.2014**
(21) Application number: 13196400.9
(22) Date of filing: 10.12.2013
(51) Int. Cl.: H04L 29/06, H04W 12/06, G06F 21/42, G06F 21/36

(54) **Token based account access**

(30) Priority: 18.12.2012 US 201213717814
(71) Applicant: Google Inc., Mountain View, CA 94043 (US)
(72) Inventor: Valdivia, Carlos, Mountain View, CA 94043 (US)
(74) Representative: Diehl & Partner GbR

(57) **Abstract**

A user account may be accessed by a mobile device by transmitting a login token from the mobile device to a server, which can authenticate the login token and grant the mobile device access to the user account. The login token can be generated by accessing the user account on a separate user device, such as a personal computer, and requesting a login token. The request may be sent to a server and a login token can be generated and sent by the server to the separate user device. The login token may then be transmitted to the mobile device and account access on the mobile device can be granted based on the login token.

## Description

### BACKGROUND

Conventionally, adding a user account to a user device such as a mobile phone, tablet, a gaming system, a home automation system or the like, requires a user to input account information using a keyboard. As a specific example, for a user to add an email account to a mobile device, the user would generally input account information, such as a user name, a password, display preferences, a preferred server, a name associated with the account, a description, or the like. Inputting account information using certain devices can be difficult and cumbersome. For example, adding an alphanumeric password on a small touch keyboard can require switching back and forth between keyboards. Further, some mobile devices do not contain a keyboard that accepts user input.

### BRIEF SUMMARY

According to implementations of the disclosed subject matter, a personal computer may be authenticated to access and may access an email account based on a username and a password. A request for an email login QR code may be received and, accordingly, a corresponding email login QR code can be generated and displayed using the personal computer. A mobile phone may scan the email login QR code to extract a login token and send the login token to an email authentication server. Accordingly, login authorization for the mobile phone may be received and the email account may be accessed on the mobile phone.

According to implementations of the disclosed subject matter, a first device may be authenticated to login to an account and may be authenticated based on a user identifier and a password. A login token can be generated and may contain access information corresponding to the account. The login token may be sent to the first device and may be encoded in a computer-readable graphic such as, but not limited to a bar code, a QR code and computer-readable text, or the like. The login token may be communicated from the first device and received by the second device. The communication may be conducted by Near Field Communications (NFC), Bluetooth, push messaging, or scanning by the second device a computer-readable graphic displayed on the first device. The login token may be received by an authentication server and the second device may be authenticated to login to the account. The login token may expire based on a predetermined factor such as, but not limited to, a login counter, a location, proximity, or the like. Authenticating the second device to login to the account may be based on at least the login token as well as an authentication code provided by a user, such as Personal Identification Number (PIN). The second device may be authenticated to log into the account until the user of the account logs off or until a predetermine condition such as a time duration, a login counter, a location, a proximity, an account login, or the like occurs.

According to implementations of the disclosed subject matter, a login token may be received from a first device that has been authenticated and logged into an account. The login token may be sent to an authentication server and account information may be received accordingly.

Additional features, advantages, and implementations of the disclosed subject matter may be set forth or apparent from consideration of the following detailed description, drawings, and claims. Moreover, it is to be understood that both the foregoing summary and the following detailed description are examples and are intended to provide further explanation without limiting the scope of the claims.

### BRIEF DESCRIPTION OF THE DRAWINGS

The accompanying drawings, which are included to provide a further understanding of the disclosed subject matter, are incorporated in and constitute a part of this specification. The drawings also illustrate implementations of the disclosed subject matter and together with the detailed description serve to explain the principles of implementations of the disclosed subject matter. No attempt is made to show structural details in more detail than may be necessary for a fundamental understanding of the disclosed subject matter and various ways in which it may be practiced.
FIG. 1 shows a computer according to an implementation of the disclosed subject matter.
FIG. 2 shows a network configuration according to an implementation of the disclosed subject matter.
FIG. 3 shows an example process for authenticating a mobile device to login to an account based on a login token.

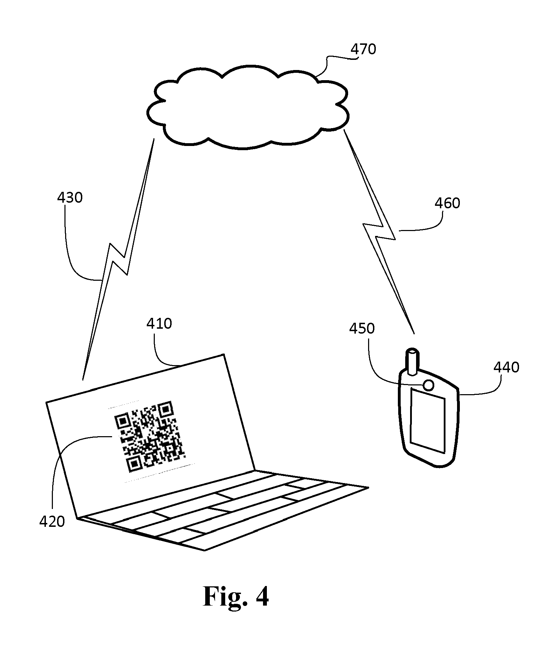

FIG. 4 shows an example arrangement for authenticating a mobile device to login to an account based on a login token.

### DETAILED DESCRIPTION

Accessing an account on a device, such as a mobile device, is generally facilitated by inputting credential information using a keyboard or a similar input component or mechanism (hereinafter, "keyboard"). Using a keyboard may consume an unacceptable amount of time, may increase the probability of user error, and may require an unacceptable amount or type of user interaction, or the like. Accordingly, it may be undesirable to access an account by using a keyboard. According to an implementation of the disclosed subject matter, a device may access an account in a seamless manner without having to input access information using a keyboard.

As an example, a user may use a username and password to login to an email account on a personal computer. According to implementations of the disclosed subject matter, the user may request a login token by interacting with the user interface of the email account via a personal computer. Based on the request, a login token may be generated and displayed to the user via the personal computer. The login token can be encoded in a format that allows transmission of the login token via a communication channel. For example, the login token may be embedded in a computer readable graphic code such as a QR code. The QR code containing the embedded login token may be displayed on the user's personal computer and the user may read the QR code using a QR code reader via a mobile phone. The QR code reader on the mobile phone may decode the QR code and extract the login token. The mobile phone may send the login token to an authentication server and the authentication server may authenticate the mobile device to gain access to the email account based on the login token. Thus, according to implementations of the disclosed subject matter, a device may gain access to an account in a seamless manner.

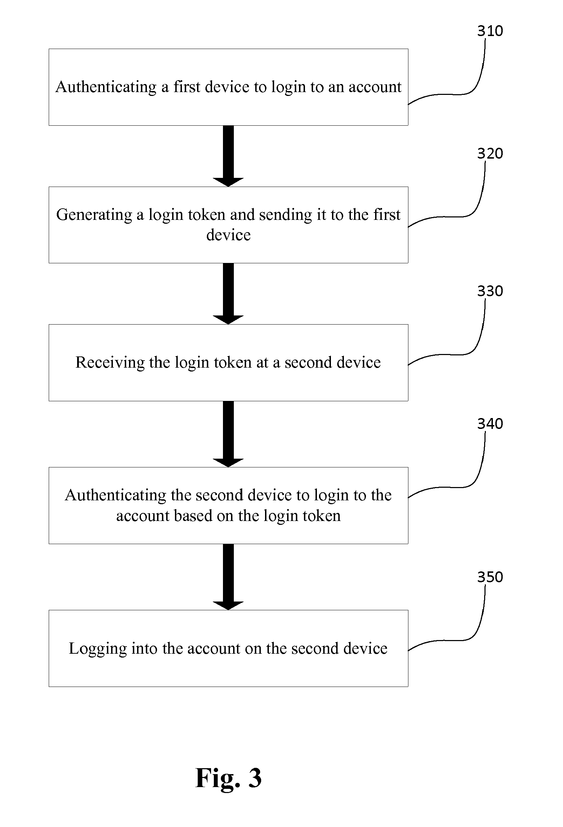

According to implementations of the disclosed subject matter, as shown in Fig. 3, a user may request a login token that can allow access to a user account. The login token may be requested from an already accessed user account, the access based on authenticating user credentials, as shown in step 310. The request for a login token may originate from an originating device, and may be from a user, application, website, software, or the like, initiating the request. For example, a user may use a personal computer to activate a browser. The user may direct the browser to an email account login page, and input a username and a password. Once the user gains access to the email account, the user may have an option, such as a button within the email user interface (UI), which enables the user to make a login token generation request.

A login token that enables access to a user account can be generated to facilitate access to the user account by a device, as shown in step 320. The login token may be generated remotely based on a request received by a token server or locally. The token server may receive the request from a successfully accessed account, and provide a login token that corresponds to that account. For example, a user can use a personal computer to access an email account and initiate a request for a login token from a token server via the email account. Additionally, the token server may authenticate the login token request by validating user credential information that is stored in the token server or that is received by the server. In an illustrative example, a user may select an option to generate a login token from within an email application that the user has accessed by entering a username and a password. A token server may receive the request for a login token and, based on the request, generate a login token corresponding to the email account through which the login token was requested. The token server may authenticate the username and password that the user provided to access the email account. Based on the request and/or the verification, the token server can generate a login token corresponding to the email account and provide the login token to the user. Alternatively, the token server may receive a request for a token that does not correspond to the account from which the request is sent. For example, a user may login to an email account and have the option to request a token for a music account from within the email account. The account from which the request for the token originates and the account for which the token provides access may be related by, but not limited to, being part of an umbrella account. The user credentials required to login to the account from which the request for the token initiates and the account for which the token provides access may be the same. A login token corresponding to the request may grant access to all the sub accounts in the umbrella account. In continuing the previous example, the email account and the music account may be part of an umbrella account that includes the email account and the music account. Here, the email account and music account may require the same username and password to allow access to either account. An umbrella account may include one or more sub-accounts such as, but not limited to, electronic mail, electronic messaging, a content (e.g., music, videos, books, etc.) account, a document account, a video account, an image account, a calendar, an online store, an application store, or the like, or a combination thereof.

According to an implementation, a locally generated token may be generated by a successfully-accessed user account client, as shown in step 320. Namely, in accordance with this implementation, the request for a login token may not be sent to a remote client, but rather, the local user account client may generate the login token. For example, a user may log into an email account and request a login token. The email client may generate the login token based on the request without transmitting the request to a remote server. The login token may enable access to the user account from which the login token is requested. Alternatively, the login token may enable access to an account related to the user account from which the login token is requested, such as, but not limited to, an umbrella account or a sub-account within an umbrella account.

According to implementations of the disclosed subject matter a login token may be transmitted by a computer readable image. The login token may be embedded in the computer readable image. The login token may be encoded into a computer readable image such as, but not limited to, a QR code, a bar code, an OCR qualified image, a digital hash, a readable arrangement, or the like or a combination thereof. The login token may be encoded within a computer readable image at either the server that generates the login token, or locally by the user account. For example, if a user uses an email account to request a login token, the request may be sent to a token server. The token server may encode the login token with a computer readable image, such as a QR code, and send it to the email account. Alternatively, the user account may generate the login token locally, or receive a non-encoded login token from a token server. The user account may encode the login token into a computer readable image. According to an implementation, the user account may present one or more formats for computer readable images from which a user can select. For example, a user requesting a login token using an email account may be given the option to receive the token as a QR code, a barcode, an OCR qualified image, a digital hash, a readable arrangement, or the like. The options can allow a user to select the format most convenient for her based on factors such as whether she owns a QR reading application or a digital hash reader.

A display device may be the device which receives and displays a login token from a token server, a local account client, or from another device. The display device may be any device capable of displaying images. The device may be, but is not limited to, a monitor, a tablet, a laptop, a mobile device, a projection, a television, a screen or the like. For example, a user may requests a login token for an email account by inputting the request using a laptop computer. The login token can be generated either by a server or locally, buy the email client. The laptop computer used to input the request may receive the login token and display the login token in a computer readable format. Alternatively, as an example, the login token may be transmitted from a laptop computer that receives the login token to a desktop personal computer. The desktop computer may display a computer readable image with the login token encoded in it using a monitor.

According to implementations of the disclosed subject matter a computer readable image containing a login token can be received by an account access device, as shown in step 330. An account access device may be a device which does not have access to the account corresponding to the login token and requires access. Further, the account access device may not contain a keyboard or may contain a keyboard or input technique that is difficult to utilize, and, thus, a seamless manner of gaining access to the account is preferable. An account access device may be a mobile device, a tablet, a camera, a peripheral device, or the like. The account access device may read the computer readable image by using any applicable input technique such as using a camera, a bar code reader, a scanner, or the like. The account access device may decode the computer readable image to extract the login token. In an illustrative example, a user with a mobile phone may wish to access an email account on the mobile phone. The user may request a login token using an email account client on the user's personal computer. The login token, encoded in a QR code, can be read and extracted using the mobile phone that requires access to the email account.

According to implementations of the disclosed subject matter, a login token may be transmitted to an account access device from an originating device. The originating device may be a display device as disclosed herein. Alternatively, the originating device may transmit the login token to the account access device via any applicable technique including, but not limited to, Near Field Communication (NFC), Bluetooth, push messaging, Infrared transmission, Wi-Fi transmission, or the like. For example, an originating mobile phone with access to a user's email account may be used to generate a login token. The originating mobile phone may be brought in close proximity to an account access mobile phone without access to the account. The mobile phones may establish a NFC connection and the originating mobile phone may transfer the login token to the account access mobile phone.

According to implementations of the disclosed subject matter, a login token may be coded such that it enables an authentication server to verify account access, as shown in step 340. An authentication server that receives a login token from an account access device may verify the login token and grant account access to the device, as shown in step 350. The account access may be verified based on user credential information contained within the login token. Namely, the login token can contain encrypted user login information, such as a username and password, which may be used by an authentication server to grant access to a device which transmits the login token. For example, a user may generally input her username, 'sarahsmith' and password 'ilovelamp' to access her email account. If the user requests a login token corresponding to the email account, the token server may generate a login token which contains encoded versions of the username 'sarahsmith' and password 'ilovelamp'. The login token may be sent to an account access device and the account access device may transmit the login token to an authentication server to receive access to the account. Alternatively, a login token may contain instructions for an authentication server to grant permission to an account access device to access a user account. For example, a token server that receives a request to generate a login token may generate a token that contains instructions for an authentication server that subsequently receives the login token to grant account access to a mobile device that transmitted the login token to the authentication server. The login token may be formatted in an encoded or a non-encoded manner. The token may be an OAuth request, a URL, a cookie, generated UUID, a peer to peer connection, or the like. For example, an encoded OAuth login token may be sent to an account access device that does not have access to an account. The device may send the OAuth login token to a server and the server may decode the login token and retrieve the instructions to grant access to an account from the OAuth login token.

The login token may be configured to provide one time user account access to the account access device. That is, an account access device may remain logged in to the account until the occurrence of a log off event, such as a logoff by a user, a timeout, etc. After the occurrence of a logoff event, access to the account will not be permitted without re-authentication of some kind. If logged off, the user may have to obtain another token or manually login to access the account through the account access device. Alternatively, the login token may be configured to provide persistent access. This may be accomplished by having the authentication server return account access credentials to the account access device upon authenticating the login token. The account access device may store the credentials, for example, in a cookie, and use them to automatically login the user whenever the user initiates an account login on the account access device. In yet another configuration, the login token may be configured to permit the user a fixed number of automatic logins. This may be accomplished by enabling the account access device to store the token and requiring the device to re-present it to the authentication server when access to the account is requested by the account access device. The authentication server may keep track of the number of times that the token has been presented or otherwise used. When the maximum number of usage times is exceeded, the email server may deny the account access device request for login. In another configuration, the token may include a counter that can be decremented or incremented each time the user logs in using the token. When the counter is equal to a predetermined minimum number (such as zero) or a maximum number (such as ten) the token may be deemed "expired", and may no longer be accepted by the authentication server to login the account access device. In yet another configuration, the authentication server may exchange the presented login token for a new login token that is sent to the account access device for a subsequent login. After a predetermined number of logins, the email server may decline to send a new token to the account access device. In another configuration, a login token may expire after or at a given time. For example, a token may no longer be recognized by the authentication server five hours after the time it was sent, after six o'clock on the date on which it is issued, after 3:59 PM PST on October 14, 2013, and so on. In another configuration, the login token may not be operable to login an account access device upon the occurrence of a predetermined event or events. For example, if the user account is accessed on three or more other machines, the login token from the account access device may not be authenticated by the authentication server. Alternatively, a login token may not be recognized by the email server based on geolocation. For example, if geolocation information is provided along with the login token at the time of login request, and the provided location information indicates a location outside of the United States, then the account access device may not receive access to the account. An administrator can specify that the token may be used within any prescribed geographical boundaries. The system can determine if the location of the device is within the boundaries and, if so, permit access to the account. Otherwise, access to the account can be denied. Further, any suitable combination of the above criteria for deciding access can be used in accordance with the disclosed subject matter.

According to an implementation of the technique, the user may be prompted to input an authentication code prior to gaining access to an account. The request may be made either prior to sending the token to the server, or after authentication by the server to of the token. The authentication code may be any applicable code including, but not limited to a letter, a word, a sequence, a number, an identifier, a sound, a biometric, or the like or combination thereof. The code may be predetermined and may be selected by the user or may be generated by the server. In an illustrative example, a user adding an email account to a mobile device may select a four digit authentication code. The user may then scan a QR code on the user's computer generated by the user's email account. The mobile device may extract a token from the QR code and request access to the email account on the mobile device based on the token. The email server may authenticate the token and then require the user to input the four digit code. If the four digit code matches the previously selected four digit authentication code then the mobile device can gain access to the email account. Likewise, the authentication code can be based on a challenge from the server to the user or the device requesting access.

As an illustrative example, according to implementations of the disclosed subject matter, a user may log into a content account by inputting a username and password on a laptop 410. For example, the content account can include digital representations of pieces of music. After gaining access to the music account on the laptop 410, the user may select a button 415 within the music account user interface. The selection of the button 430 can initiate a request for a login token corresponding to the music account. Based on the request for the login token, the laptop 410 may send a request to a server 470 for the login token. The server 470 may validate the request from the laptop 410 by authenticating the source of the request, for example, the music account from which the request originated. The server 470 can then send a login token, for example, a QR code 420 to the laptop 410, the QR code encoding the login token. The user may use a mobile phone 440 with a camera 450 and a QR reader to scan the QR code from the computer 410. The mobile phone may decode the QR code to extract the login token and transmit the login token to the server 470. The server may validate the login token and, based on the validation, grant the mobile phone 440 access to the music account from which the login token was originally requested on the laptop 410.

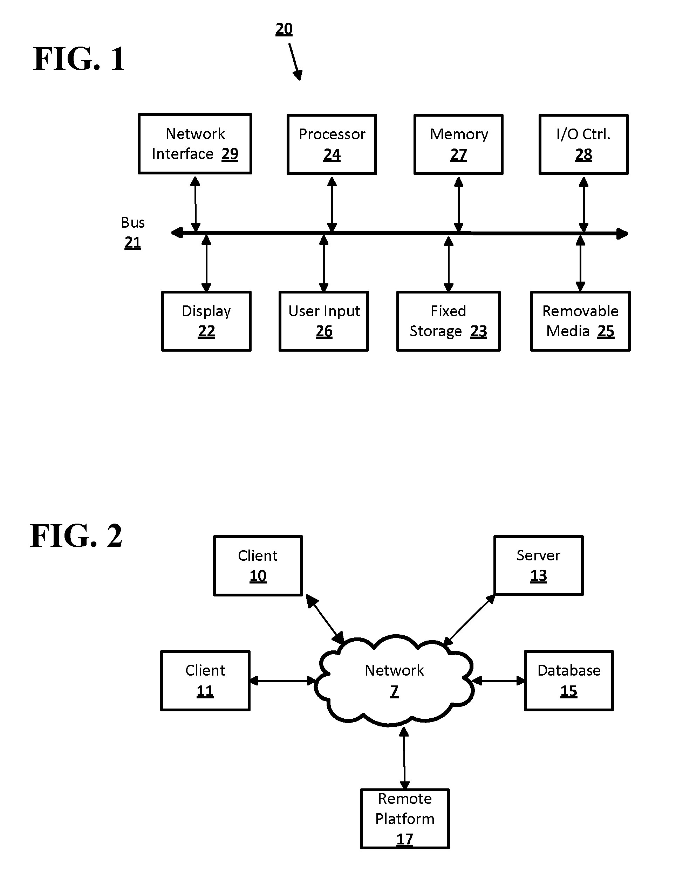

Implementations of the presently disclosed subject matter may be implemented in and used with a variety of component and network architectures. FIG. 1 is an example computer 20 suitable for implementing implementations of the presently disclosed subject matter. The computer 20 includes a bus 21 which interconnects major components of the computer 20, such as a central processor 24, a memory 27 (typically RAM, but which may also include ROM, flash RAM, or the like), an input/output controller 28, a user display 22, such as a display screen via a display adapter, a user input interface 26, which may include one or more controllers and associated user input devices such as a keyboard, mouse, and the like, and may be closely coupled to the I/O controller 28, fixed storage 23, such as a hard drive, flash storage, Fibre Channel network, SAN device, SCSI device, and the like, and a removable media component 25 operative to control and receive an optical disk, flash drive, and the like.

The bus 21 allows data communication between the central processor 24 and the memory 27, which may include read-only memory (ROM) or flash memory (neither shown), and random access memory (RAM) (not shown), as previously noted. The RAM can include the main memory into which the operating system and application programs are loaded. The ROM or flash memory can contain, among other code, the Basic Input-Output system (BIOS) which controls basic hardware operation such as the interaction with peripheral components. Applications resident with the computer 20 can be stored on and accessed via a computer readable medium, such as a hard disk drive (e.g., fixed storage 23), an optical drive, floppy disk, or other storage medium 25.

The fixed storage 23 may be integral with the computer 20 or may be separate and accessed through other interfaces. A network interface 29 may provide a direct connection to a remote server via a telephone link, to the Internet via an internet service provider (ISP), or a direct connection to a remote server via a direct network link to the Internet via a POP (point of presence) or other technique. The network interface 29 may provide such connection using wireless techniques, including digital cellular telephone connection, Cellular Digital Packet Data (CDPD) connection, digital satellite data connection or the like. For example, the network interface 29 may allow the computer to communicate with other computers via one or more local, wide-area, or other networks, as shown in FIG. 2.

Many other devices or components (not shown) may be connected in a similar manner (e.g., document scanners, digital cameras and so on). Conversely, all of the components shown in FIG. 1 need not be present to practice the present disclosure. The components can be interconnected in different ways from that shown. The operation of a computer such as that shown in FIG. 1 is readily known in the art and is not discussed in detail in this application. Code to implement the present disclosure can be stored in computer-readable storage media such as one or more of the memory 27, fixed storage 23, removable media 25, or on a remote storage location.

FIG. 2 shows an example network arrangement according to an implementation of the disclosed subject matter. One or more clients 10, 11, such as local computers, smart phones, tablet computing devices, and the like may connect to other devices via one or more networks 7. The network may be a local network, wide-area network, the Internet, or any other suitable communication network or networks, and may be implemented on any suitable platform including wired and/or wireless networks. The clients may communicate with one or more servers 13 and/or databases 15. The devices may be directly accessible by the clients 10, 11, or one or more other devices may provide intermediary access such as where a server 13 provides access to resources stored in a database 15. The clients 10, 11 also may access remote platforms 17 or services provided by remote platforms 17 such as cloud computing arrangements and services. The remote platform 17 may include one or more servers 13 and/or databases 15.

More generally, various implementations of the presently disclosed subject matter may include or be implemented in the form of computer-implemented processes and apparatuses for practicing those processes. Implementations also may be implemented in the form of a computer program product having computer program code containing instructions implemented in non-transitory and/or tangible media, such as floppy diskettes, CD-ROMs, hard drives, USB (universal serial bus) drives, or any other machine readable storage medium, wherein, when the computer program code is loaded into and executed by a computer, the computer becomes an apparatus for practicing implementations of the disclosed subject matter. Implementations also may be implemented in the form of computer program code, for example, whether stored in a storage medium, loaded into and/or executed by a computer, or transmitted over some transmission medium, such as over electrical wiring or cabling, through fiber optics, or via electromagnetic radiation, wherein when the computer program code is loaded into and executed by a computer, the computer becomes an apparatus for practicing implementations of the disclosed subject matter. When implemented on a general-purpose microprocessor, the computer program code segments configure the microprocessor to create specific logic circuits. In some configurations, a set of computer-readable instructions stored on a computer-readable storage medium may be implemented by a general-purpose processor, which may transform the general-purpose processor or a device containing the general-purpose processor into a special-purpose device configured to implement or carry out the instructions. Implementations may be implemented using hardware that may include a processor, such as a general purpose microprocessor and/or an Application Specific Integrated Circuit (ASIC) that implements all or part of the techniques according to implementations of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to implementations of the disclosed subject matter.

The application further discloses: A method comprising: authenticating a personal computer to access an email account based on a username and a password; accessing the email account on the personal computer; receiving a request for an email login QR code; generating the email login QR code corresponding to the email account; displaying the email QR code using the personal computer; scanning the email login QR code using a mobile phone; extracting a login token from the email login QR code; sending the login token from the mobile phone to an email authentication server; receiving login authorization for the mobile phone based on sending the login token; and accessing the email account from the mobile phone.

A further method, comprising: receiving a login token at a first device from a second device, the token provided to the second device based upon a successful login to an account from the second device; sending the login token from the first device to an authentication server; and accessing the account from the first device based on an authentication of the login token by the authentication server.

The foregoing description, for purpose of explanation, has been described with reference to specific implementations. However, the illustrative discussions above are not intended to be exhaustive or to limit implementations of the disclosed subject matter to the precise forms disclosed. Many modifications and variations are possible in view of the above teachings. The implementations were chosen and described in order to explain the principles of implementations of the disclosed subject matter and their practical applications, to thereby enable others skilled in the art to utilize those implementations as well as various implementations with various modifications as may be suited to the particular use contemplated.

## Claims

1. A method, comprising:
authenticating at least one login credential from a first device to login to an account;
generating a login token;
sending the login token to the first device;
receiving from a second device the login token; and
authenticating the login token from the second device; and
permitting access to the account from the second device.

2. The method of claim 1, wherein the authenticating at least one login credential from a first device to login to an account comprises authenticating a user identifier and a password.

3. The method of one of claims 1 or 2, wherein the login token is encoded in a computer-readable graphic.

4. The method of claim 1 to 3, wherein the login token contains access information corresponding to the account.

5. The method of one of claims 1 to 3, wherein the login token is encoded in at least one of the group consisting of: a bar code, a QR code and computer-readable text.

6. The method of one of claims 1 to 5, further comprising communicating the login token from the first device to the second device.

7. The method of one of claims 1 to 5, further comprising communicating the login token from the first device to the second device by at least one technique selected from the group consisting of: Near Field Communications, push messaging, Bluetooth and scanning by the second device a computer-readable graphic displayed on the first device.

8. The method of one of claims 1 to 7, wherein authenticating the second device to login to the account further comprises sending the login token to an authenticating server.

9. The method of one of claims 1 to 8, wherein the login token expires based on a predetermined factor.

10. The method of one of claims 1 to 8, wherein the login token expires based on at least one factor selected from the group consisting of an expiration time, a login counter, a location, and a geographic location.

11. The method of one of claims 1 to 10, wherein authenticating the second device to login to the account further comprises:
receiving an authentication code provided by a user; and
authenticating the second device to login to the account based on receiving the login token from the second device and the authentication code.

12. The method of one of claims 1 to 11, wherein the second device is authenticated to log into the account until the occurrence of a logoff event.

13. The method of one of claims 1 to 11, wherein the second device is authenticated to log into the account until a predetermined condition occurs.

14. The method of one of claims 1 to 11, wherein the second device is authenticated to log into the account based on a condition selected form the group consisting of a time duration, a login counter, a location, a proximity, and an account login.

15. A system, comprising:
a database; and
a processor in connection with said database, the processor configured to perform the method according to one of the preceding claims.
